(19) Europäisches Patentamt
European Patent Office
Office européen des brevets

(11) Numéro de publication : **0 178 956**
**B1**

(12) # FASCICULE DE BREVET EUROPÉEN

(45) Date de publication du fascicule du brevet : 03.01.90

(51) Int. Cl.$^5$ : C 07 F 7/22

(21) Numéro de dépôt : 85401633.4

(22) Date de dépôt : 12.08.85

(54) **Préparation d'une poudre de difluorure de dibutyl étain destinée à la formation d'un revêtement sur un substrat notamment en verre.**

(30) Priorité : 22.08.84 FR 8413069

(43) Date de publication de la demande : 23.04.86 Bulletin 86/17

(45) Mention de la délivrance du brevet : 03.01.90 Bulletin 90/01

(84) Etats contractants désignés : AT BE CH DE FR GB IT LI LU NL SE

(56) Documents cités :
US–A– 4 254 046
ORGANOTIN COMPOUNDS, Vol. 1, p. 97, Marcel Dekker, Inc., New York, 1971
Gmelin: Handbuch der Anorganischen Chemie "Zinn-organische Verbindungen", Teil 5, page 47 (1978)

(73) Titulaire : SAINT-GOBAIN VITRAGE INTERNATIONAL
18, avenue d'Alsace
F-92400 Courbevoie (FR)

(72) Inventeur : Kerherve, Jean-Pierre
28 bis chemin des Fonceaux Linas
F-91310 Monthlery (FR)
Inventeur : Queromes, Armel
Appt. 123 - Residence du Foulon
F-91120 Villebon Sur Yvette (FR)

(74) Mandataire : Leconte, Jean-Gérard et al
Saint-Gobain Recherche 39, Quai Lucien Lefranc
F-93304 Aubervilliers Cedex (FR)

EP 0 178 956 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne la préparation d'une poudre de difluorure de dibutyl étain (D.B.T.F.) destinée à être déposée sur un substrat notamment en verre, à haute température, de façon à donner après pyrolyse, un revêtement d'oxyde d'étain.

De tels revêtements sont fréquemment employés sur des produits verriers, en vue de renforcer leur surface, de la colorer, en vue de leur conférer des caractéristiques optiques et/ou électriques particulières, notamment une basse émissivité.

L'emploi de D.B.T.F. en poudre pour obtenir un revêtement, notamment de basse émissivité, est prévu dans le brevet européen publié sous le n° 0 039 256.

Le D.B.T.F. est de façon classique fabriqué à partir de dichlorure de dibutyl étain (D.B.T.Cl.) et de fluorure de potassium en milieu hydroalcoolique suivant la réaction.

$$(Bu)_2SnCl_2 + 2KF \text{---} (Bu)_2SnF_2 + 2KCl$$

Le D.B.T.F. ainsi obtenu contient du potassium en impureté.

Il est également connu de synthétiser le D.B.T.F. à partir de fluorure de sodium ou d'autres fluorures d'alcalins ou d'alcalino-terreux ; le D.B.T.F. obtenu contient alors en impureté du sodium et en général un alcalin ou un alcalino-terreux.

Cet alcalino-terreux ou cet alcalin tel le sodium ou le potassium se retrouve dans le revêtement pyrolysé et en capte les charges électriques libres. Il en résulte des caractéristiques optiques et électriques du revêtement, réduites par rapport à celles d'un revêtement qui serait exempt d'une telle impureté.

En outre la poudre de D.B.T.F. est appliquée sur les substrats à revêtir, notamment un ruban de verre sortant d'un bain float, par projection à l'aide d'une buse du type de celle décrite dans les demandes de brevets FR 8 304 124 et 8 304 125. Le revêtement est de qualité uniforme si la poudre coule bien dans les dispositifs de distribution et de dosage en amont de la buse et dans la buse elle-même, si elle n'a pas tendance à s'y agglomérer. Les impuretés alcalino-terreuses ou alcalines, en particulier le sodium ou le potassium, présentes dans la poudre rendent celle-ci hygroscopique, ce qui nuit à sa coulabilité et par conséquent est préjudiciable à l'obtention d'un revêtement homogène.

Il est évidemment possible d'éliminer ces impuretés par une et le plus souvent de multiples opérations supplémentaires telles des purifications mais ceci est long et couteux.

Il est par ailleurs connu par le brevet US-A-4 254 046 une méthode de synthèse du difluorure de diméthyl étain (D.M.T.F.), mais le D.M.T.F. est différent du D.B.T.F. ; on ne sait pas l'obtenir sous la forme d'une poudre compatible avec le procédé de distribution par une buse, évoqué précédemment, et en outre quelle que soit sa forme il n'est pas utilisable pour l'applicatior pyrolyse envisagée.

La présente invention vise à fournir un composé de D.B.T.F. qui ne contiendrait pas d'impuretés alcalino-terreuses ou alcalines gênantes, en particulier pas de sodium ou de potassium, autorisan ainsi l'obtention de revêtements d'une part plus homogènes et plus uniformes, et d'autre par exempts d'impuretés susceptibles d'amoindrir leurs performances.

Elle vise aussi à fournir une poudre de D.B.T.F. dont les grains ont une forme et une dimension, lui permettant d'être facilement et régulièrement véhiculée dans les dispositifs servant à la distribuer sur le substrat.

Pour cela, elle propose de synthétiser le composé de D.B.T.F. à partir de composés exempts d'alcalino-terreux et d'alcalins tels que le sodium et le potassium, en particulier un halogénure d'étain tel que du dichlorure de dibutyl étain ($Bu_2$ $SnCl_2$) et un fluorure d'ammonium notamment le bifluorure d'ammonium ($NH_4F$, HF). Le procédé selon l'invention consiste à faire réagir l'halogénure d'étain en solution alcoolique et le fluorure d'ammonium en solution aqueuse, à récupérer le précipité obtenu, à le laver dans l'eau, puis dans un solvant, tel que l'acétone, apte à capter l'eau.

Elle propose, en outre, d'agir sur la forme et la granulométrie de la poudre de D.B.T.F. en incorporant dans les mélanges réactionnels au cours de la synthèse, une poudre ayant une granulométrie moyenne de l'ordre de 15 nanomètres, dans des proportions de 0,5 % à 5 % et de préférence de l'ordre de 1 % par rapport au poids de D.B.T.F.

Avantageusement cette poudre est une silice finement divisée.

Pour agir sur la forme et la granulométrie de la poudre de D.B.T.F., l'invention propose également d'opérer une recristallisation par refroidissement rapide.

Cette recristallisation est avantageusement effectuée dans un alcool, en particulier du méthanol et le refroidissement est de l'ordre de 45 à 90 °C.

Avantageusement également le produit cristallisé obtenu est lavé avec un solvant chloré tel que le chlorure de méthylène ou un solvant fluorochloré tel que trichloro-trifluoro-éthane.

Nous décrivons ci-après plus en détail un exemple de synthèse du composé de D.B.T.F. en poudre.

On solubilise du D.B.T.Cl. dans un alcool, avantageusement le méthanol, dans une première cuve. Dans une seconde cuve, on dispose du bifluorure d'ammonium ($NH_4F$, HF) en solution dans l'eau. On coule le contenu d'une cuve dans l'autre et au contact des deux solutions un précipité de D.B.T.F. se forme. On agite pour favoriser le contact entre les deux solutions. On récupère le précipité formé, on essore, on lave à l'eau puis avec un solvant du type acétone pour éliminer

l'eau, on sèche.

Pour purifier le D.B.T.F. obtenu on le redissout dans un solvant approprié, par exemple un alcool et en particulier le méthanol, puis on fait recristalliser le D.B.T.F.. On peut répéter cette opération plusieurs fois.

Au cours de cette opération de purification si elle est unique, ou au cours de la dernière opération de purification s'il y en a plusieurs, alors que l'on chauffe à reflux, sous agitation de préférence, on ajoute une poudre finement divisée, de granulométrie moyenne de l'ordre de 15 nanomètres et en général comprise entre 7 et 20 nanomètres, soit de l'ordre de 1/1 000ème de la granulométrie désirée pour la poudre de D.B.T.F.

Comme poudre de faible granulométrie on utilise avantageusement de la silice finement divisée et en particulier celle commercialisée sous la dénomination de « Aérosil R 972 ».

Pour faire cristalliser le D.B.T.F., on opère un refroidissement brutal de l'ordre d'au moins 45 °C et en général compris entre 45 et 90 °C. Ce refroidissement rapide peut être obtenu par coulée de la solution à base de D.B.T.F. dans une réserve de solvant froid, de préférence simultanément refroidi en permanence.

Ainsi par exemple, le D.B.T.F. étant en solution dans du méthanol chauffé à reflux, à une température de l'ordre de 69 °C, on coule la solution chaude de D.B.T.F. dans le méthanol, dans une quantité importante d'alcool froid, par exemple également du méthanol. Avantageusement pour que le refroidissement soit encore important à la fin de la coulée on verse la solution chaude de D.B.T.F. dans une quantité d'alcool froid approximativement égale à la moitié de la quantité de solution chaude. Avantageusement pour obtenir le refroidissement brutal tout en limitant malgré tout la quantité de solvant froid nécessaire, on refroidit en continu ledit solvant froid pendant la coulée. Avec ces proportions, du solvant froid initialement à — 20 °C peut se retrouver à + 25 °C après la coulée complète de la solution chaude de D.B.T.F., si bien que le refroidissement est d'environ 45 °C à 90 °C.

Ce refroidissement rapide provoque la précipitation du D.B.T.F. en grains fins et réguliers, la poudre de granulométrie de l'ordre de 15 nanomètres, notamment l'Aérosil, servant alors d'initiateur de cristallisation.

Selon une variante, pour obtenir un meilleur refroidissement, ainsi qu'une plus grande constance dans la taille des grains, le refroidissement brutal se fait en pulvérisant la solution chaud de D.B.T.F dans l'alcool froid.

De préférence, pour obtenir un refroidissement identique pour toute la solution chaude de D.B.T.F., l'opération de refroidissement a lieu dans une cuve intermédiaire avec successivement des petites quantités d'alcool froid prélevées dans la cuve contenant la totalité de l'alcool destiné à toute l'opération de refroidissement, petites quantités dans lesquelles on distribue successivement par coulée ou pulvérisation, de petites quantités de solution chaude de D.B.T.F.

Ce dernier précipité est essoré, lavé, séché et tamisé. Avantageusement, cette étape comporte un lavage et éventuellement plusieurs, avec un solvant chloré tel le chlorure de méthylène ou fluorochloré tel le trichloro-trifluoro-éthane ou avec une solution d'un tel solvant.

Ce lavage élimine l'alcool et dans notre exemple le méthanol resté sur les cristaux formés, solubilise et élimine les traces de dichlorure de dibutyl étain restant, préjudiciables à une bonne coulabilité et favorise le séchage.

Avantageusement ce lavage peut-être effectué par une technique particulière dite « clairçage ».

Un tel lavage peut éventuellement également être pratiqué à d'autres stades de la synthèse, mais avec un intérêt moindre quant au rendement.

On obtient alors des grains sphériques de D.B.T.F. de granulométrie moyenne de 15 à 25 microns.

Ces grains ont la propriété de parfaitement bien se distribuer sans s'agglomérer, de former une poudre qui coule bien.

Cette bonne coulabilité est due à la forme et à la taille des grains, au fait que ces grains sans impureté de potassium, de sodium et en général d'alcalins ou d'alcalino-terreux, soient peu sensibles à l'humidité, au fait que la fine poudre « d'Aérosil » introduite au cours de la synthèse et ayant servi d'initiateur de cristallisation, réalise aussi un enrobage des grains qui favorise leur glissement les uns sur les autres.

Par cette méthode précédemment décrite, à titre d'exemple non limitatif, on peut indiquer qu'à partir de :

156 kg de D.B.T.Cl.,
256 kg de méthanol,
44 kg de bifluorure-d'ammonium,
240 kg d'eau,
on a obtenu 125 kg de D.B.T.F. brut sec.

Ces 125 kg ont été dissous dans 2 000 kg de méthanol, on a ajouté 1,25 kg d'Aérosil et la solution ainsi obtenue a été coulée dans un temps d'environ 5 mn dans 1 000 kg de méthanol à — 20 °C. Après essorage, lavage, séchage et tamisage à 60 microns, on a recueilli 100 kg D.B.T.F. prêt à l'emploi.

Une telle poudre de D.B.T.F. peut donc être employée pour obtenir des revêtements sur des substrats en verre, notamment des vitrages, mais elle peut également être déposée sur des substrats d'une autre nature, par exemple métaux, céramiques, etc...

## Revendications

1. Procédé de préparation d'un composé solide de difluorure de dibutyl étain (D.B.T.F.), caractérisé en ce qu'on fait réagir un halogénure d'étain, notamment du dichlorure de dibutylétain, en solution dans un alcool, avec un fluorure d'ammonium, notamment du bifluorure d'ammonium, en solution dans l'eau, les composés halogénure d'étain et fluorure d'ammonium étant exempts d'éléments alcalins ou alcalinoterreux, on récupère le précipité obtenu, on le lave à l'eau, puis dans un solvant, tel l'acétone, apte à capter l'eau.

2. Procédé selon la revendication 1, caractérisé en ce que le produit de réaction de l'halogénure d'étain et du fluorure d'ammonium est purifié par au moins une recristallisation dans un alcool, notamment le méthanol.

3. Procédé selon la revendication 2, caractérisé en ce que, au cours de l'opération de recristallisation ou au cours de la dernière de ces opérations lorsqu'il y en a plusieurs, on ajoute une poudre finement divisée de granulométrie comprise entre 7 et 20 nanomètres, de préférence de l'ordre de 15 nanomètres.

4. Procédé selon la revendication 3, caractérisé en ce que la poudre est de la silice finement divisée.

5. Procédé selon l'une des revendications 2 à 4, caractérisé en ce qu'on obtient la cristallisation par un refroidissement brutal du D.B.T.F. synthétisé en solution dans un alcool, notamment du méthanol.

6. Procédé selon la revendication 5, caractérisé en ce que le refroidissement est d'au moins 45 °C.

7. Procédé selon une des revendications 5 ou 6, caractérisé en ce qu'on réalise le refroidissement brutal en mettant brutalement en contact la solution chaude de D.B.T.F. dans l'alcool et de l'alcool froid, notamment du méthanol.

8. Procédé selon la revendication 7, caractérisé en ce que la mise en contact brutale est obtenue par coulée de la solution chaude de D.B.T.F. dans l'alcool, dans une quantité d'alcool froid, environ égale à la moitié de la quantité de solution chaude.

9. Procédé selon la revendication 8, caractérisé en ce que pendant la coulée, on refroidit l'alcool dans lequel on verse la solution chaude.

10. Procédé selon la revendication 7, caractérisé en ce que la mise en contact de la solution chaude de D.B.T.F. avec de l'alcool froid est obtenue par pulvérisation de ladite solution chaude dans l'alcool froid.

11. Procédé selon l'une des revendications 7 à 10, caractérisé en ce que la mise au contact de la solution chaude de D.B.T.F. avec de l'alcool froid s'opère sur des séries de petites quantités prélevées à la fois dans la solution chaude et dans l'alcool froid.

12. Procédé selon l'une des revendications précédentes, caractérisé en ce qu'on pratique un lavage du produit synthétisé à l'aide d'un solvant chloré, tel que le chlorure de méthylène ou fluoro-chloré tel que le trichloro-trifluoro-éthane ou d'une solution d'un tel solvant.

13. Procédé selon la revendication 12, caractérisé en ce que ce lavage est pratiqué après purification par recristallisation.

## Claims

1. A method of preparing a solid compound of dibutyl tin difluoride (D.B.T.F.), characterized in that a tin halide, notably dibutyl tin dichloride, in solution in alcohol is caused to react with an ammonium fluoride, notably ammonium bifluoride, in solution in water, the compounds tin halide and ammonium fluoride being free from alkaline or alkaline-earth elements, the precipitate obtained is recovered, it is washed in water, then in a solvent such as acetone, suitable for capturing water.

2. A method according to Claim 1, characterized in that the reaction product of the tin halide and the ammonium fluoride is purified by at least one recrystallization in an alcohol, notably methanol.

3. A method according to Claim 2, characterized in that, during the recrystallization operation or during the last of these operations when there are several thereof, a finely divided powder having a granulometry of between 7 and 20 nanometres, preferably of the order of 15 nanometres, is added.

4. A method according to Claim 3, characterized in that the powder is finely divided silica.

5. A method according to one of Claims 2 to 4, characterized in that the recrystallization is produced by an abrupt cooling of the synthesized D.B.T.F. in solution in an alcohol, notably methanol.

6. A method according to Claim 5, characterized in that the cooling is through at 45 °C.

7. A method according to one of Claims 5 or 6, characterized in that the abrupt cooling is achieved by abruptly bringing into contact the hot solution of D.B.T.F. in alcohol and cold alcohol, notably methanol.

8. A method according to Claim 7, characterized in that the abrupt bringing into contact is achieved by pouring the hot solution of D.B.T.F. in alcohol into a quantity of cold alcohol approximately equal to one half of the quantity of hot solution.

9. A method according to Claim 8, characterized in that during the pouring the alcohol, into which the hot solution is poured, is cooled.

10. A method according to Claim 7, characterized in that the bringing into contact of the hot solution of D.B.T.F. with cold alcohol is achieved by atomization of said hot solution into the cold alcohol.

11. A method according to one of Claims 7 to 10, characterized in that the bringing into contact of the hot solution of D.B.T.F. with cold alcohol is carried out on series of small quantities taken at the same time from the hot solution and from the cold alcohol.

12. A method according to one of the preceding Claims, characterized in that a washing of the synthesized product is carried out with a chlorinated solvent, such as methylene chloride, or a fluoro-chlorinated solvent, such as trichlorotrifluoro-ethane, or with a solution of such a solvent.

13. A method according to Claim 12, characterized in that this washing is carried out after purification by recrystallization.

**Patentansprüche**

1. Verfahren zum Herstellen einer festen Dibutylzinndifluor-(D.B.Z.F.)-Verbindung, dadurch gekennzeichnet, daß man ein Zinnhalogenid, insbesondere Dibutylzinndichlorid in Lösung in einem Alkohol mit einem Ammoniumfluorid, insbesondere Ammoniumdifluorid, in Lösung in Wasser umsetzt, wobei die Halogenidverbindungen des Zinns und des Ammoniumfluorids frei von Alkalioder Erdalkalielementen sind, man den erhaltenen Niederschlag gewinnt, ihn mit Wasser und dann mit einem zur Aufnahme von Wasser befähigten Lösungsmittel, wie Aceton, wäscht.

2. Verfahren nach Anspruch 1, dadurch gekennzeichnet, daß das Umsetzungsprodukt des Zinnhalogenids und des Ammoniumfluorids durch mindestens eine Umkristallisation in einem Alkohol, insbesondere Methanol, gereinigt wird.

3. Verfahren nach Anspruch 2, dadurch gekennzeichnet, daß man während der Umkristallisation oder während der letzten dieser Operationen, wenn es deren mehrere gibt, ein feinzerteiltes Pulver mit einer Korngröße zwischen 7 und 20 nm, vorzugsweise in der Größenordnung von 15 nm, hinzugibt.

4. Verfahren nach Anspruch 3, dadurch gekennzeichnet, daß das Pulver feinzerteiltes Siliciumdioxid ist.

5. Verfahren nach einem der Ansprüche 2 bis 4, dadurch gekennzeichnet, daß man die Kristallisation durch plötzliches Abkühlen des in Lösung in einem Alkohol, insbesondere Methanol, synthetisierten D.B.Z.F. bewirkt.

6. Verfahren nach Anspruch 5, dadurch gekennzeichnet, daß die Abkühlung um mindestens 45 °C erfolgt.

7. Verfahren nach einem der Ansprüche 5 oder 6, dadurch gekennzeichnet, daß man die plötzliche Abkühlung durch plötzliches Inberührungbringen der warmen Lösung des D.B.Z.F. in Alkohol mit einem kalten Alkohol, insbesondere Methanol, ausführt.

8. Verfahren nach Anspruch 7, dadurch gekennzeichnet, daß das plötzliche Inberührungbringen durch Gießen der warmen Lösung des D.B.Z.F. in Alkohol in eine Menge kalten Alkohols erfolgt, die etwa die Hälfte der Menge der warmen Lösung beträgt.

9. Verfahren nach Anspruch 8, dadurch gekennzeichnet, daß man den Alkohol, in den man die warme Lösung gießt, während des Eingießens kühlt.

10. Verfahren nach Anspruch 7, dadurch gekennzeichnet, daß das Inberührungbringen der warmen Lösung des D.B.Z.F. mit dem kalten Alkohol durch Zerstäuben der genannten warmen Lösung in den kalten Alkohol erfolgt.

11. Verfahren nach einem der Ansprüche 7 bis 10, dadurch gekennzeichnet, daß man beim Inberührungbringen der warmen Lösung des D.B.Z.F. mit dem kalten Alkohol mit einer Reihe kleiner Mengen arbeitet, die gleichzeitig aus der warmen Lösung und dem kalten Alkohol abgenommen werden.

12. Verfahren nach einem der vorhergehenden Ansprüche, dadurch gekennzeichnet, daß man das synthetisierte Produkt mit einem chlorierten Lösungsmittel, wie Methylenchlorid oder einem fluorochlorierten Lösungsmittel, wie Trichlortrifluorethan, oder einer Lösung eines solchen Lösungsmittels wäscht.

13. Verfahren nach Anspruch 12, dadurch gekennzeichnet, daß das Waschen nach dem Reinigen durch Umkristallisation erfolgt.